# EUROPÄISCHE PATENTSCHRIFT

(11) **EP 1 357 009 B1**
(45) Veröffentlichungstag und Bekanntmachung des Hinweises auf die Patenterteilung: **21.02.2007**
(21) Anmeldenummer: 03007588.1
(22) Anmeldetag: 02.04.2003
(51) Int. Cl.: B61H 5/00, F16D 55/22

(54) **Bremseinrichtung mit Bremsgestänge für Schienenfahrzeuge**
Brake assembly with brake linkage for railway vehicles
Système de freinage avec timonerie de frein pour véhicules ferroviaires

(30) Priorität: 25.04.2002 DE 20206648 U
(43) Veröffentlichungstag der Anmeldung: 29.10.2003
(73) Patentinhaber: Faiveley Transport Remscheid GmbH, 42859 Remscheid (DE)
(72) Erfinder: Merkel, Thomas, Dr., 50354 Hürth (DE); Plitzko, Claudius, 58089 Hagen (DE)
(74) Vertreter: Gerbaulet, Hannes

(56) Entgegenhaltungen:
- EP-A- 0 482 282
- GB-A- 1 545 843
- US-A- 4 053 034
- US-A- 4 781 273

## Beschreibung

Die Erfindung betrifft eine Bremseinrichtung, wie im Oberbegriff von Patentanspruch 1 angegeben. Eine solche Bremseinrichtung ist aus der US-A-4,781,273 bekannt.

Bremseinrichtungen der gattungsgemäßen Art sind bekannt. Diese sind beispielsweise als Scheibenbremsen ausgebildet. Derartige Scheibenbremsen umfassen zangenförmig angeordnete Bremshebel, die drehbeweglich an einer Bremszugstange angelenkt sind. Mittels einer Antriebseinrichtung sind die Bremshebel jeweils um eine Drehachse verschwenkbar, so dass an den Bremshebeln angeordnete Bremsbeläge als erste Bremspartner in Wirkkontakt mit einem zweiten Bremspartner, beispielsweise bei Schienenfahrzeugen, mit einer auf einer Achse angeordneten Bremsscheibe bringbar sind. Üblicherweise werden bei Schienenfahrzeugen die Antriebseinrichtungen für derartige Scheibenbremsen durch Druckluftzylinder gebildet.

Zum Ableiten der Bremskraft ist die Bremseinrichtung mit einem Festpunkt, bei Schienenfahrzeugen einem Drehgestell, verbunden. Hierbei ist bekannt, die Bremsbrücke über ein elastisches Lager mit dem Drehgestell zu verbinden. Die Bremsbrücke ist hierbei mit einer Lagerbuchse kraftschlüssig verbunden, die von einem Lagerbolzen durchgriffen wird, der wiederum mit dem Drehgestell kraftschlüssig verbunden ist.

Da bekanntermaßen insbesondere bei Schienenfahrzeugen die Bremseinrichtung betriebsbedingt erheblichen mechanischen Belastungen, beispielsweise durch Stöße, Vibrationen oder dergleichen, ausgesetzt ist, ist bekannt, das Lager zur Befestigung der Bremseinrichtung am Drehgestell als elastisches Lager auszubilden. Hierbei ist der mit dem Drehgestell verbundene Lagerbolzen über ein elastisches Mittel, in der Regel eine Gummieinlage oder dergleichen, mit der Lagerbuchse verbunden. Dieses elastische Lager dient einer Schwingungsdämpfung.

Bei den bekannten Bremseinrichtungen, insbesondere für Schienenfahrzeuge, ist nachteilig, dass zur Aufnahme großer Kräfte die elastischen Lager entsprechend groß dimensioniert werden müssen. Dies führt zu erhöhtem Bauraumbedarf.

Der Erfindung liegt die Aufgabe zugrunde, eine Bremseinrichtung der gattungsgemäßen Art zu schaffen, die sich durch einen robusten, funktionellen und einen geringen Bauraum beanspruchenden Aufbau auszeichnet.

Erfindungsgemäß wird diese Aufgabe durch eine Bremseinrichtung mit den im Anspruch 1 genannten Merkmalen gelöst.

Dadurch, dass das elastische Lager zweistufig ausgebildet ist, wird vorteilhaft erreicht, dass eine Optimierung des Lagers sowohl auf einen Normalbetrieb als auch auf einen Belastungsbetrieb erfolgen kann. Insbesondere dadurch, dass das Lager eine erste elastische Stufe und eine zweite unelastische Stufe umfasst, lassen sich die während des Normalbetriebes auftretenden Vibrationen, Schläge oder dergleichen durch die elastische Stufe des Lagers dämpfen, während bei einem Belastungsbetrieb große auftretende Kräfte durch die zweite Stufe hoher Steifigkeit des Lagers sicher abgeleitet werden können. Somit kann die elastische Stufe des Lagers auf ein notwendiges Minimum reduziert werden, so dass die von der elastischen Stufe des Lagers in Anspruch genommene Bauweise ebenfalls auf das notwendige Minimum reduziert ist. Die elastische Stufe braucht somit nicht mehr für die Aufnahme von Kräften im Belastungsbetrieb ausgelegt zu werden. Hierdurch ergeben sich erhebliche Vorteile in der Funktionalität des gesamten Lagers sowie insbesondere bei einer Optimierung von dessen Bauvolumen.

Erfindungsgemäß ist vorgesehen, dass das elastische Lager eine mit dem Bremsgestänge kraftschlüssig verbundene Lagerbuchse und einen mit dem Festpunkt kraftschlüssig verbundenen Lagerbolzen umfasst, wobei die elastische Stufe von einem elastischen Mittel gebildet ist, über das der Lagerbolzen mit der Lagerbuchse verbunden ist. Hierdurch lässt sich in einfacher Weise die elastische Stufe des Lagers durch den an sich bekannten Aufbau eines elastischen Lagers realisieren. Das den Lagerbolzen umgreifende elastische Mittel - über das der Lagerbolzen mit der Lagerbuchse in Verbindung steht - lässt sich auf die während des Normalbetriebes der Bremseinrichtung erwarteten Belastungen (Schläge, Vibrationen oder dergleichen) anpassen. Insbesondere kann eine Dicke des elastischen Mittels auf ein notwendiges Minimum reduziert werden. Hierdurch reduziert sich der gesamte Bauvolumenbedarf des Lagers.

Weiterhin ist erfindungsgemäß vorgesehen, dass die Lagerbuchse einen, den Lagerbolzen koaxial umgreifenden und beabstandet zu diesem angeordneten Stützring aufweist, dem vorzugsweise ein Lagerring des Lagerbolzens zugeordnet ist. Stützring der Lagerbuchse und Lagerring des Lagerbolzens werden durch das elastische Mittel der elastischen Lagerstufe beabstandet zueinander gehalten. Hierdurch wird erreicht, dass die durch den Stützring und den Lagerring gebildete zweite Stufe hoher Steifigkeit des Lagers inaktiv ist und erst bei Überschreiten einer Mindestkraft, die durch die erste elastische Stufe des Lagers vorgebbar ist, wirkt. Diese Mindestkraft ist durch eine Dicke und/oder ein Elastizitätsmodul der ersten elastischen Stufe einstellbar.

Ferner ist in bevorzugter Ausgestaltung der Erfindung vorgesehen, dass der Stützring und der Lagerring korrespondierende Lagerflächen ausbilden, wobei vorzugsweise der Stützring eine konkave Lagerfläche und der Lagerring eine konvexe Lagerfläche besitzt. Hierdurch wird erreicht, dass einerseits eine relativ große Lagerfläche zum Ableiten der Kräfte zur Verfügung steht und andererseits durch die korrespondierende Ausführung als konkave und konvexe Lagerfläche eine kardanische Bewegung des Lagerbolzens innerhalb der Lagerbuchse erhalten bleibt. Hierdurch können nicht nur Kräfte abgefangen werden, sondern es kann gleichzeitig ein Bewegungsausgleich des Bremsgestänges sichergestellt werden.

Weitere bevorzugte Ausgestaltungen der Erfindung ergeben sich aus den übrigen in den Unteransprüchen genannten Merkmalen.

Die Erfindung wird nachfolgend in einem Ausführungsbeispiel anhand der zugehörigen Zeichnungen näher erläutert. Es zeigen:
- Figur 1: in einer schematischen Perspektivansicht eine Scheibenbremse eines Schienenfahrzeuges und
- Figur 2: in einer schematischen Schnittdarstellung ein elastisches Lager.

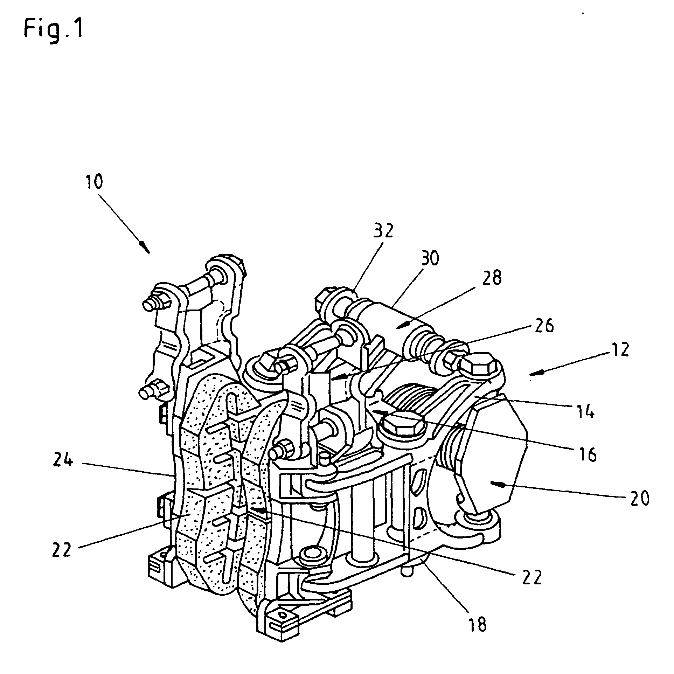

Figur 1 zeigt eine insgesamt mit 10 bezeichnete Bremseinrichtung in einer schematischen Perspektivansicht. Die Bremseinrichtung 10 ist als Scheibenbremse ausgebildet und dient beispielsweise dem Abbremsen von Schienenfahrzeugen.

Die Bremseinrichtung 10 umfasst ein Bremsgestänge 12, das einen Bremshebel 14 sowie eine Bremsbrücke 16 umfasst. Der Bremshebel 14 ist über eine Drehachse 18 drehbeweglich an der Bremsbrücke 16 angelenkt. Der Bremshebel 14 ist einerseits mit einer Antriebseinrichtung 20, in dem gezeigten Beispiel mit einem Druckluftzylinder, verbunden. An der der Antriebseinrichtung 20 abgewandten Seite - in Bezug auf die Drehachse 18 - trägt der Bremshebel 14 einen Bremsbelag 22, der als Bremspartner dient. Beabstandet zu dem Bremsbelag 22 ist ein weiterer Bremsbelag 22 angeordnet, der an einem Bremsbelaghalter 24 befestigt ist. Die Bremsbeläge 22 bilden einen ersten Bremspartner, die mit einem - nicht dargestellten - zweiten Bremspartner zusammenwirken. Der zweite Bremspartner ist beispielsweise eine auf einer Radachse angeordnete Bremsscheibe, die in den Zwischenraum zwischen den Bremsbelägen 22 eingreift.

Die Bremseinrichtung 10 ist über Hängelaschen 26 (auch als Hängeeisen bezeichnet) an einem nicht dargestellten Drehgestell eines Schienenfahrzeugs befestigt. Die Bremseinrichtung 10 ist ferner über ein Lager 28 mit dem Drehgestell verbunden. Hierbei ist eine Lagerbuchse 30 kraftschlüssig mit der Bremsbrücke 16 verbunden, während ein Lagerbolzen 32 kraftschlüssig mit dem Drehgestell verbunden ist. Das Lager 28 ist - wie später noch erläutert wirdals elastisches Lager ausgebildet.

Bei einer nicht dargestellten Ausführungsform ist eine Bremszangenform vorgesehen, die keine Hängelaschen besitzt. Die auftretenden Kräfte werden dann über ein zweites Gummilager aufgenommen.

Der allgemeine Aufbau und die Wirkungsweise der Bremseinrichtung 10 sind bekannt, so dass im Rahmen der vorliegenden Beschreibung hierauf nicht näher eingegangen wird. Im Bremsfall wird die Antriebseinrichtung 20 mit Druckluft beaufschlagt, so dass ein Kolben der Antriebseinrichtung 20 eine Betätigungskraft auf den Bremshebel 14 ausübt. Dieser wird hierauf um die Drehachse 18 verschwenkt, so dass die Bremsbeläge 22 aufeinander zu bewegt werden. Hierdurch erfolgt ein Einklemmen der zwischen den Bremsbelägen 22 sich befindenden Bremsscheibe, so dass es zu einem Reibkontakt zwischen den Bremspartnern kommt und der Bremsvorgang eingeleitet wird.

Während des bestimmungsgemäßen Einsatzes der Bremseinrichtung 10 unterliegt diese einer erheblichen mechanischen Beanspruchung. Insbesondere werden Schläge, Vibrationen oder dergleichen während des Fahrbetriebes des Schienenfahrzeuges über das Drehgestell auf die Bremseinrichtung 10 übertragen. Um eine Dämpfung dieser Schläge und Vibrationen zu erreichen, ist die Bremseinrichtung 10 über das elastische Lager 28 mit dem Drehgestell verbunden. Das elastische Lager 28 dient somit einer Entkopplung der Bremseinrichtung 10 von den Schlägen, Vibrationen oder dergleichen.

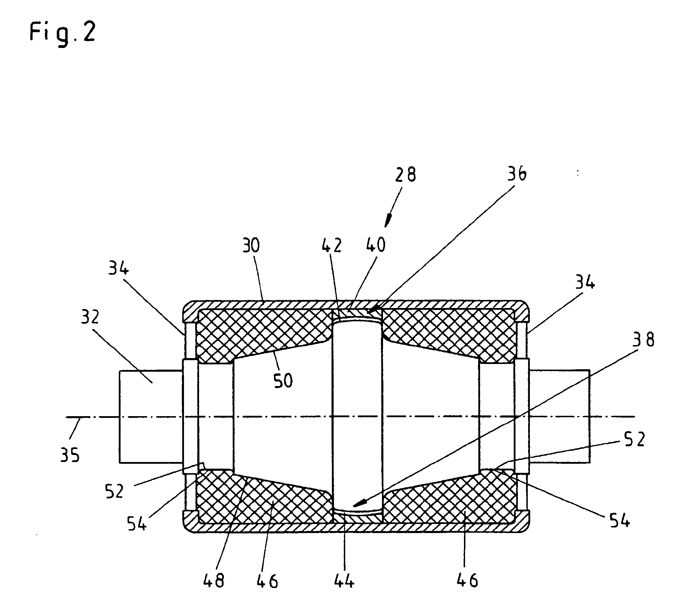

Figur 2 zeigt in einer schematischen Schnittdarstellung das elastische Lager 28. Es wird deutlich, dass die Lagerbuchse von dem Lagerbolzen 32 axial durchgriffen wird. Die Lagerbuchse besitzt hierzu Durchgangsöffnungen 34, deren Durchmesser größer ist als ein Durchmesser des Lagerbolzens im Bereich der Durchgangsöffnungen 34. Lagerbuchse 30 und Lagerbolzen 32 sind vorzugsweise rotationssymmetrisch zu einer Längsachse 35 ausgebildet. Die Lagerbuchse 30 besitzt einen inneren Stützring 36, der den Lagerbolzen 32 koaxial umgreift. Dem Stützring 36 ist ein Lagerring 38 des Lagerbolzens 32 zugeordnet. Der Stützring 36 besitzt eine konkave erste Lagerfläche 40, der eine konvexe zweite Lagefläche 42 des Lagerringes 38 zugeordnet ist Im Ruhezustand sind Stützring 36 und Lagerring 38 beabstandet zueinander angeordnet. Zwischen Stützring 36 und Lagerring 38 befindet sich ein Ringspalt 44, der beispielsweise als Luftspalt ausgebildet ist.

Der Lagerbolzen 32 wird innerhalb der Lagerbuchse 30 durch elastische Mittel 46 gehalten. Die elastischen Mittel 46 sind beispielsweise als Gummiringe oder dergleichen ausgebildet. Die elastischen Mittel 46 besitzen jeweils eine axiale Durchgangsöffnung 48, deren Innenkontur einer Außenkontur 50 des Lagerbolzens 32 angepasst ist. Insbesondere besitzt der Lagerbolzen 32 zwei Ringnuten 52, in die die elastischen Mittel 46 jeweils mit einem Ringwulst 54 eingreifen. Durch das Zusammenwirken von Ringnuten 52 und Ringwulsten 54 wird eine lagegenaue Positionierung des Lagerbolzens 32 innerhalb der Lagerbuchse 30 möglich. Es erfolgt quasi eine selbstjustierende Positionierung des Lagerbolzens 32. Insbesondere erfolgt hierdurch eine Ausrichtung des Lagerringes 38 zu dem Stützring 36, so dass die zueinander zugeordneten Lagerflächen 40 und 42 koaxial zueinander verlaufen.

Die Lagerbuchse 30 ist - wie Figur 1 verdeutlicht - mit der Bremsbrücke 16 kraftschlüssig verbunden, während der Lagerbolzen 32 mit dem nicht dargestellten Drehgestell kraftschlüssig verbunden ist. Auf das Drehgestell einwirkende Schläge, Vibrationen oder dergleichen werden von dem Lagerbolzen 32 aufgenommen und über die elastischen Mittel an die Lagerbuchse 30 übertragen. Durch die elastischen Mittel 46 erfolgt hierbei eine Entkopplung, so dass eine Schwingungsdämpfung gegeben ist. Die Höhe der Schwingungsdämpfung kann durch eine Dicke der elastischen Mittel 46 und/oder ein Elastizitätsmodul der elastischen Mittel 46 eingestellt werden.

Anhand der Darstellung wird also deutlich, dass der Lagerbolzen 32 durch die elastischen Mittel 46 im Bereich des Lagerringes 38 auf Abstand zu dem Stützring 36 gehalten wird. Übersteigt nun die an dem Lagerbolzen 32 angreifende Kraft eine Mindestkraft, erfolgt eine elastische Verformung der elastischen Mittel 46 soweit, dass der Lagerring 38 in direkten Anlagekontakt mit dem Stützring 36 gelangt. Somit erfolgt in diesem Fall eine direkte Kraftleitung über den Kontakt zwischen Lagerbolzen 32 und Lagerring 38 einerseits und Lagerbuchse 30 und Stützring 36 andererseits.

Es wird deutlich, dass durch die gefundene Ausgestaltung ein zweistufiges elastisches Lager 28 realisiert ist. Eine erste elastische Stufe wird durch die elastischen Mittel 46 realisiert, während eine zweite Stufe mit hoher Steifigkeit durch den Lagerring 38 in Verbindung mit dem Stützring 36 realisiert ist. Somit kann je nach Einsatzbedingungen der Bremseinrichtung 10 eine optimale Lagergestaltung gewählt werden, insbesondere kann die elastische Stufe auf die während einer normalen Beanspruchung auftretenden Vibrationen, Schläge oder dergleichen eingestellt werden, während bei einer Lastbeanspruchung Lagerring 38 und Stützring 36 die Kräfte aufnehmen.

Durch die korrespondierende Ausbildung der Lagerflächen 40 und 42, einerseits die konkave Lagerfläche 40 und andererseits die konvexe Lagerfläche 42, wird darüber hinaus gewährleistet, dass eine kardanische Bewegung des Lagerbolzens 32 auch im Lastfalle erhalten bleibt. Die Lagerflächen 40 und 42 können hierbei - ohne dass es zu einer Verringerung der die Kraft ableitenden Lagerfläche kommt - relativ zueinander bewegt werden.

### BEZUGSZEICHENLISTE

- 10: Bremseinrichtung
- 12: Bremsgestänge
- 14: Bremshebel
- 16: Bremsbrücke
- 18: Drehachse
- 20: Antriebseinrichtung
- 22: Bremsbelag
- 24: Bremsbelaghalter
- 26: Hängelaschen
- 28: Lager
- 30: Lagerbuchse
- 32: Lagerbolzen
- 34: Durchgangsöffnungen
- 35: Längsachse
- 36: Stützring
- 38: Lagerring
- 40: Lagerfläche
- 42: Lagerfläche
- 44: Ringspalt
- 46: elastische Mittel
- 48: Durchgangsöffnung
- 50: Außenkontur
- 52: Ringnut
- 54: Ringwulst

## Patentansprüche

1. Bremseinrichtung (10), insbesondere für Schienenfahrzeuge, mit einem Bremsgestänge (12), das wenigstens einen ersten Bremspartner trägt, der mit einem zweiten Bremspartner in Wirkkontakt bringbar ist, wobei das Bremsgestänge (12) über mindestens ein Lager (28) mit einem Festpunkt verbunden ist, wobei das Lager (28) zweistufig mit einer ersten elastischen und einer zweiten unelastische Stufe ausgebildet ist, **dadurch gekennzeichnet, dass** das Lager (28) eine mit der Bremsbrücke (16) kraftschlüssig verbundene Lagerbuchse (30) und einen mit dem Festpunkt kraftschlüssig verbundenen Lagerbolzen (32) umfasst, dass die Lagerbuchse (30) einen, den Lagerbolzen (32) koaxial umgreifenden und beabstandet zu diesem angeordneten Stützring (36) aufweist, und dass der Lagerbolzen (32) einen dem Stützring (36) zugeordneten Lagerring (38) aufweist.

2. Bremseinrichtung nach Anspruch 1, **dadurch gekennzeichnet, dass** die elastische Stufe von wenigstens einem elastischen Mittel (46) gebildet ist, über das der Lagerbolzen (32) mit der Lagerbuchse (30) verbunden ist.

3. Bremseinrichtung nach einem der vorhergehenden Ansprüche, **dadurch gekennzeichnet, dass** der Stützring (36) und der Lagerring (38) korrespondierende Lagerflächen (40, 42) ausbilden.

4. Bremseinrichtung nach einem der vorhergehenden Ansprüche, **dadurch gekennzeichnet, dass** der Stützring (36) eine konkave Lagerfläche (40) und der Lagerring (38) eine konvexe Lagerfläche (42) besitzen.

5. Bremseinrichtung nach einem der vorhergehenden Ansprüche, **dadurch gekennzeichnet, dass** der Lagerbolzen (32) und das wenigstens eine elastische Mittel (46) korrespondierende Formmerkmale (52, 54) besitzen.

6. Bremseinrichtung nach einem der vorhergehenden Ansprüche, **dadurch gekennzeichnet, dass** der Lagerbolzen (32) wenigstens eine Ringnut (52) umfasst, in die ein korrespondierender Ringwulst (54) des wenigstens einen elastischen Mittels (46) formschlüssig eingreift.

7. Bremseinrichtung nach einem der vorhergehenden Ansprüche, **dadurch gekennzeichnet, dass** die Bremseinrichtung (10) eine Scheibenbremse ist.

## Claims

1. Brake device (10), in particular for rail vehicles, with a brake linkage (12) which carries at least one first brake partner which can be brought into operational contact with a second brake partner, whereby the brake linkage (12) is connected with a fixed point by at least one bearing (28), whereby the bearing (28) is configured with two stages with a first elastic stage and a second non elastic stage, **characterized in that** the bearing (28) comprises a bearing bush (30) non-positively connected with the brake bridge (16) and a bearing bolt (32) non-positively connected with the fixed point, that the bearing bush (30) has a supporting ring (36) coaxially encompassing the bearing bolt (32) and spaced from this bolt and that the bearing bolt (32) has a bearing ring (38) assigned to the supporting ring (36).

2. Brake device according to claim 1, **characterized in that** the elastic stage is formed by at least one elastic means (46) by which the bearing bolt (32) is connected with the bearing bush (30).

3. Brake device according to any of the preceding claims, **characterized in that** the supporting ring (36) and the bearing ring (38) constitute corresponding bearing surfaces (40, 42).

4. Brake device according to any of the preceding claims, **characterized in that** the supporting ring (36) has a concave bearing surface (40) and the bearing ring (38) a convex bearing surface (42).

5. Brake device according to any of the preceding claims, **characterized in that** the bearing bolt (32) and the at least one elastic means (46) possess corresponding shape characteristics (52, 54).

6. Brake device according to any of the preceding claims, **characterized in that** the bearing bolt (32) comprises at least one annular groove (52) into which a corresponding annular bead (54) of the at least one elastic means (46) engages positively.

7. Brake device according to any of the preceding claims, **characterized in that** the brake device (10) is a disk brake.

## Revendications

1. Dispositif de freinage (10), en particulier pour véhicules sur rails, avec une timonerie de freinage (12) qui porte au moins un premier partenaire de freinage qui peut être amené en contact opérationnel avec un second partenaire de freinage, la timonerie de freinage (12) étant reliée par au moins un palier (28) à un point fixe, le palier (28) étant configuré à deux étages avec un premier étage élastique et un second étage élastique, **caractérisé en ce que** le palier (28) comprend un coussinet (30) relié par adhérence au pont du frein (16) et un boulon de palier (32) relié par adhérence au point fixe, que le coussinet (30) présente un anneau d'appui (36) qui enveloppe le boulon de palier (32) coaxialement et qui est placé espacé par rapport à celui-ci et que le boulon de palier (32) présente un anneau de palier (38) qui correspond à l'anneau d'appui (36).

2. Dispositif de freinage selon la revendication 1, **caractérisé en ce que** l'étage élastique est formé par au moins un moyen élastique (46) par lequel le boulon de palier (32) est relié au coussinet (30).

3. Dispositif de freinage selon l'une des revendications précédentes, **caractérisé en ce que** l'anneau d'appui (36) et l'anneau de palier (38) forment des surfaces de palier correspondantes (40, 42).

4. Dispositif de freinage selon l'une des revendications précédentes, **caractérisé en ce que** l'anneau d'appui (36) présente une surface de palier concave (40) et l'anneau de palier (38) une surface de palier convexe (42).

5. Dispositif de freinage selon l'une des revendications précédentes, **caractérisé en ce que** le boulon de palier (32) et le moyen élastique (46) qui existe au moins possèdent des caractéristiques de forme correspondantes (52, 54).

6. Dispositif de freinage selon l'une des revendications précédentes, **caractérisé en ce que** le boulon de palier (32) comprend une rainure annulaire (52) dans laquelle un bourrelet annulaire (54) correspondant du moyen élastique (46) qui existe au moins s'engrène de manière crabotée.

7. Dispositif de freinage selon l'une des revendications précédentes, **caractérisé en ce que** le dispositif de freinage (10) est un frein à disque.
